(19) Europäisches Patentamt
European Patent Office
Office européen des brevets

(11) **EP 3 133 402 B1**

(12) **EUROPEAN PATENT SPECIFICATION**

(45) Date of publication and mention
of the grant of the patent:
**18.12.2019 Bulletin 2019/51**

(51) Int Cl.:
**G01P 5/02** *(2006.01)*     **G01P 5/14** *(2006.01)*
**G01P 21/02** *(2006.01)*     **G01P 5/22** *(2006.01)*

(21) Application number: **15181741.8**

(22) Date of filing: **20.08.2015**

(54) **SENSOR SYSTEM FOR DETERMINING AIR VELOCITIES**

SENSORSYSTEM ZUR BESTIMMUNG VON LUFTGESCHWINDIGKEITEN

SYSTÈME DE CAPTEUR POUR LA DÉTERMINATION DE VITESSES D'AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.02.2017 Bulletin 2017/08**

(73) Proprietor: **Airbus Operations GmbH**
**21129 Hamburg (DE)**

(72) Inventors:
• **RENGER, Klaus**
**21129 Hamburg (DE)**

• **POTSCHKA, Nikolai**
**21129 Hamburg (DE)**

(74) Representative: **LKGLOBAL**
**Lorenz & Kopf PartG mbB Patentanwälte**
**Brienner Straße 11**
**80333 München (DE)**

(56) References cited:
**EP-B1- 0 824 669        FR-A1- 3 007 526
US-A1- 2014 229 139    US-A1- 2014 358 333**

## Description

Technical field

The invention relates to the determination of air velocities. In particular, the invention relates to a sensor system for an aircraft for determining a velocity of air flowing past the aircraft, to an aircraft, to a method of determining an air velocity for an aircraft, to a program element and to a computer-readable medium.

Technical background

In aeronautic applications, the air velocity and/or the aircraft speed is usually measured by means of pitot tubes. A pitot tube is a pressure measurement instrument that can be used to measure fluid flow velocity. The pitot tube may determine the stagnation pressure of the air and the airflow velocity may be derived from the measured stagnation pressure. Such pitot tubes can, for example, be mounted at the fuselage of an aircraft.

EP 0 824 669 B1 describes a system for determining the physical characteristics of an incident fluid flow stream over a surface of a vehicle. The system includes at least one first pressure sensor mounted on the surface for receiving dynamic pressure signals generated by the convected boundary layer of the fluid flow stream and for providing an output signal. At least one array of second pressure sensors is positioned downstream of the at least one first pressure sensor, wherein each of the second pressure sensors provides a second output signal. A computer system is adapted to receive the first and second signals and to calculate the angular direction of the fluid flow relative to the axis and the velocity thereof.

US 2014/0229139 A1 proposes to determine a flight velocity of an aircraft based on measuring dimensional changes of a structural part of the aircraft, onto which the surrounding airflow acts.

US 2014/0358333 A1 discloses a method for vibration measurement and velocity determination for a rotorcraft.

Summary of the invention

It may be seen as an object of the invention to improve the determination of air velocities for aircrafts.

This object is solved by the subject-matter of the independent claims. Further advantages and embodiments can be found in the dependent claims, the description and the figures.

The invention relates to a sensor system for an aircraft for determining a velocity of air flowing past the aircraft. The sensor system comprises a first sensor that is configured for being arranged at a structure of the aircraft. Furthermore, the sensor system comprises an evaluation device. The first sensor is configured for determining a first response of the structure to a first local pressure fluctuation of a boundary layer of the air flowing past the aircraft and for generating a first signal on the basis of said determined first response. The evaluation device is configured for processing the first signal and for determining an actual air velocity on the basis of the first signal.

The sensor system described herein may be comprised by the aircraft. For example, the first sensor of the sensor system may be arranged at a structure of the aircraft. The evaluation device of the sensor system may, for example, be a part of the aircraft electronics.

The first sensor may be any kind of sensor that is configured for determining a response of the structure of the aircraft. For example, the first sensor may be an accelerometer or a strain sensor. Moreover, the first sensor may be configured for being attached or embedded in the structure of the aircraft. For example, the first sensor may be attached at the structure after the structure is manufactured. Alternatively, the first sensor may be embedded in the structure while manufacturing the structure or after having manufactured the structure.

The structure of the aircraft may refer to the whole structure of the aircraft. Thus the structure may comprise a plurality of structural parts, for example, the skin of the aircraft, stringers, frames of the fuselage, of wings, of horizontal or vertical stabilizers. The first sensor may be arranged at any structural part of the aircraft, which structural part responds to a local pressure fluctuation of a boundary layer of the air flowing past the aircraft correlated to the air velocity or the aircraft velocity. In other words, the first sensor may be attached to a structure of the aircraft, which structure responds to local pressure fluctuations in correlation to the air velocity or the aircraft velocity. The first sensor may be arranged at the structure at a position where the velocity of the boundary layer of the air is correlated to the aircraft velocity. Moreover, the first sensor may be arranged at a position where the structure is not polluted by other excitations (e.g. from the engine) or by the structure's own structural behaviour.

The first response of the structure to a first local pressure fluctuation of a boundary layer of the air flowing past the aircraft may refer to a reaction of the structure to said local pressure fluctuation. For example, the first response may be a vibration or oscillation of the structure, which vibration or oscillation is caused by the first local pressure fluctuation. In other words, the response of the structure may be stimulated by the first local pressure fluctuation. The first local pressure fluctuation of the boundary layer of the air flowing past the aircraft may be a turbulence, a vortex and/or an eddy that is propagating along the surface of the aircraft. In other words, the boundary layer may be flowing over the surface of the aircraft. The first local pressure fluctuation may be locally delimited to a portion of the aircraft surface. The boundary layer of the air flowing past the aircraft may be the layer of the air that is adjacent to the surface of the aircraft. In other words, the turbulence, vortex and/or eddy may be generated in the boundary layer of the air flowing past the aircraft.

The first signal, which is generated by the first sensor on the basis of the determined first response, may contain information about an amplitude and/or a frequency of the first response. Moreover, the first signal may contain any information describing a vibration or oscillation of the first response. The first sensor may further be configured for transmitting the first signal to the evaluation device. For example, the first sensor may comprise an antenna for transmitting the first signal by wireless transmission. The first sensor may also be connected to the evaluation device by means of a cable for transmitting the first signal.

The evaluation device may comprise a processing unit that is configured for receiving the first signal and for processing the first signal. For example, the evaluation device may look up the air velocity in a database, i.e. a look-up table, on the basis of the first signal. In other words, the database, i.e. the look-up table, may connect individual first signals with individual air velocities.

The determined air velocity may be correlated to the aircraft velocity. Thus, the evaluation device may be configured for determining the aircraft velocity on the basis of the first signal and/or on the basis of the determined actual air velocity.

The first sensor and the evaluation device may further comprise a signal transmission device for transmitting the first signal from the first sensor to the evaluation device. The signal transmission device may, for example, be a wire connecting the first sensor and the evaluation device. Furthermore, the first sensor may also be configured for transmitting the first signal to the evaluation device by means of wireless transmission. Thus, the first sensor and the evaluation device may comprise an antenna, respectively, for sending and/or receiving the first signal. The sensors or the evaluation device of the sensor system described herein may further comprise a low or high pass filter for limiting the observed frequencies to the range showing the best correlation with the air velocity. In this way, the accuracy may be increased.

In this way, the velocity of air flowing past the aircraft can be determined on the basis of a response of the structure of the aircraft to local pressure fluctuations in the boundary layer of the air flowing past the aircraft. For example, such a sensor system as described herein may be implemented in an aircraft in addition to the conventional pitot tubes. In this way, a higher degree of redundancy for determining the air velocity is provided. However, the sensor system described herein may also replace the usual pitot tubes.

According to an exemplary embodiment of the invention, the evaluation device comprises a first database, which first database comprises a plurality of first-type entries corresponding to signals of the first sensor and a plurality of second-type entries corresponding to air velocities. The first-type entries are linked to the second-type entries. Furthermore, the evaluation device is configured for looking-up the actual air velocity in the database on the basis of the first signal.

In other words, the first database provides a look-up table, wherein the first-type entries are arranged in a first column of the look-up table and the second-type entries are arranged in a second column of the look-up table. Thus, the first database provides a correspondence or connection between the first-type entries and the second-type entries. In this way, a fast and reliable way of determining the air velocity on the basis of the response of the structure is provided.

The evaluation device may be configured for selecting a first-type entry of the database, which selected first-type entry is closest to the generated first signal. Subsequently, the evaluation device may read out the second-type entry, which corresponds to the selected first-type entry. This corresponding second-type entry may correspond to the actual air velocity. In this way, the evaluation device may look-up the actual air velocity. This is, however, only a simplified description of the look-up procedure. The evaluation device may also perform other kinds of database queries for looking-up the actual air velocity. In other words, the first database may provide a one-to-one correspondence between the first signals of the first sensor and the air velocities.

The evaluation device may further comprise a storing unit, on which the first database is stored, for example a memory unit, e.g. a memory chip.

Thus, the air velocity may be determined using a direct empirical approach where the first sensor signal is continuously transferred into a frequency spectrum. The frequency spectrum, i.e. the amplitude distribution over different frequencies, can be correlated in the first database, which first database provides a link to the air velocities. In principle, one sensor location may be sufficient. However, the accuracy may be increased using several sensors at different locations. The sensor locations may be chosen such that the properties of the boundary layer are different (e.g. sensors may be installed at the front and the rear of the aircraft). The different behaviour and frequency characteristics of the boundary layer at the different positions may provide additional information.

According to a further exemplary embodiment of the invention, the first-type entries of the first database correspond to frequency spectra of signals of the first sensor. The evaluation device is configured for generating a first frequency spectrum of the first signal and for looking-up the actual air velocity in the first database on the basis of the first frequency spectrum. In other word, each first-type entry may be a frequency spectrum.

The inventors have recognized, that the frequency spectrum of the signal determined on the basis of a response of the aircraft structure may correspond to a velocity of air flowing past the aircraft. Thus, the actual air velocity may be reliably determined on the basis of said first frequency spectrum.

According to the invention, the sensor system comprises a second sensor for being arranged at the structure of the aircraft. The second sensor is configured for determining a second response of the structure of the aircraft to a second local pressure fluctuation of the boundary layer of the air flowing past the aircraft. Furthermore, the second sensor is configured for generating a second signal on the basis of said determined second response. The evaluation device is configured for processing the first signal and the second signal and for determining the actual air velocity on the basis of the first signal and the second signal.

The explanations given above with regard to the first sensor, the first local pressure fluctuation, and/or the first signal also applies to second, third or additional sensors, local pressure fluctuations, and/or signals. A second local pressure fluctuation may, e.g., be the first local pressure fluctuation (e.g. vortex or eddy), which has propagated from a first position to a second position. Although the second sensor is configured for being arranged at the same structure as the first sensor, it may be arranged at a different structural part of the structure. For example, the first sensor may be arranged at a first skin panel and the second sensor may be arranged at a second skin panel. However, the first and second sensors may also be arranged at the same structural part.

In other words, the evaluation device may be configured for processing signals of at least two sensors measuring the responses of the structure of the aircraft to local pressure fluctuations in the boundary layer of the air flowing past the aircraft. For example, the evaluation device may be configured for determining a correlation between the first signal and the second signal and for determining the actual air velocity on the basis of the correlation between the first and second signals. Moreover, the evaluation device may also be configured for determining a time difference between the first signal and the second signal.

For example, the first and second signals may be caused by a vortex or an eddy that is propagating along the surface of the aircraft. Thus, when the eddy passes the position where the first sensor is arranged the first sensor generates a first signal and when the eddy passes the structure at the position where the second sensor is arranged the second sensor generates a second signal. Thus, by determining the time difference between the first signal and the second signal, the evaluation device may determine the time the eddy needs to propagate from the first sensor to the second sensor. In this way, the evaluation device may determine the velocity of the eddy (for example by knowing the distance between the first sensor and the second sensor). Thus, the convection or phase velocity may be measured. The evaluation device may further be configured for determining the actual air velocity on the basis of the velocity of the eddy passing the first and second sensors. For example, a correspondence between the velocities of eddies and the air velocities may be stored in the evaluation device or the storing unit of the evaluation device, respectively.

Thus, the air velocity may be determined using a deterministic approach, where a correlation, e.g. a correlation function, between at least two sensors is measured. In a first step, the convection or phase velocity of the boundary layer may be determined through the correlation function between the sensor signals, either in the frequency domain of in the time domain. Different sensor arrangements can be used to increase the accuracy. In a second step, the convection or phase velocity of the turbulent boundary layer may be correlated in a database with air velocities. In this database, convection velocities and air velocities may be linked by analytical and/or empirical data. The accuracy may be increased by using several sensor arrangements at different distant locations of the aircraft where different convection or phase velocities occur.

By measuring the air velocity on the basis of at least two sensors, a precise measurement of air velocities is provided.

According to the invention, the evaluation device is configured for determining a correlation function between the first signal and the second signal and for determining the actual air velocity on the basis of the determined correlation function.

A correlation function describes the correlation between two signal locations here named as first signal x(t) and second signal y(t), especially in the context of a propagation problem. The correlation function $R_{xy}(\tau)$ may be written as:

$$R_{xy}(\tau) = \lim_{T \to \infty} \frac{1}{T} \int\limits_0^T x(t)y(t+\tau)dt.$$

The relationship between the frequency response function H(/), the distance d of the propagation path and the propagation velocity c may depend on the correlation function as follows:

$$R_{xy}(\tau) = H(f)R_{xx}\left(\tau - \frac{d}{c}\right).$$

The convection velocity $c_1$ can be calculated from the measured time delay $\tau_1$ and sensor distance $d_1$:

$$C_1 = \frac{d_1}{\tau_1}.$$

According to the invention, the sensor system comprises a second sensor for being arranged at the structure of the aircraft. The second sensor is configured for determining a second response of the structure of the aircraft to a second local pressure fluctuation of the boundary layer of the air flowing past the aircraft. Furthermore, the second sensor is configured for generating a second signal on the basis of said determined second response. The evaluation device is configured for processing the first signal and the second signal and for determining the actual air velocity on the basis of the first signal and the second signal. Furthermore, the evaluation device is configured for determining the flow separation.

The first and second sensors may be configured for being arranged at locations that are sensitive for flow separation.

Flow separation may lead to a local backflow, i.e. a flow in the reverse direction, close to the surface and to large eddies. This may significantly alter the turbulent pressures in the boundary layer locally and thus affect the structural response which can be measured by the sensor system. The evaluating device can be configured to detect the associated specific characteristics (e.g. frequency spectrum) of the structural response.

According to the invention, the evaluation device is configured for determining a velocity of eddies of a boundary layer of the air flowing past the aircraft on the basis of the correlation function. The evaluation device comprises a second database, which second database comprises a plurality of third-type entries corresponding to velocities of eddies and a plurality of fourth-type entries corresponding to air velocities. The third-type entries are linked to the fourth-type entries. The evaluation device is configured for looking-up an air velocity in the database on the basis of the first signal.

The description that is given with reference to the first database, the first-type entries and the second-type entries also applies to the second database, the third-type entries and the fourth-type entries, when applicable. Thus, the second database may also be stored in a storing unit of the evaluation device. The first database and the second database may, e.g., refer to different data-sets (e.g. look-up tables) of the same database. In this way, a fast and reliable way of determining the air velocity on the basis of the velocities of eddies is provided.

An eddy may refer to a swirling of a fluid, i.e. of the air flowing past the aircraft. In the context of the present invention, the term eddy may also refer to a vortex.

According to a further exemplary embodiment of the invention, the sensor system comprises a third sensor configured for being arranged at a structure of the aircraft. The third sensor is configured for determining a third response of the structure of the aircraft to a third local pressure fluctuation of the boundary layer of the air flowing past the aircraft. Furthermore, the third sensor is configured for generating a third signal on the basis of said determined third response. The evaluation device is configured for determining an actual angle of attack of the aircraft by determining a maximum or minimum coherence between the first signal, the second signal, and the third signal.

The angle of attack may relate to the angle between a chord line of the wing of a fixed-wing aircraft and the vector representing the relative motion between the aircraft and the atmosphere.

As a simple example, when the evaluation device determines that only the first and second signals of the first and second sensors are correlated, it may determine that the angle of attack is determined by the line connecting the first sensor and the second sensor. This shall, however, only give a simple example for determining the angle of attack on the basis of more than two sensors.

The first, second and third sensors may be arranged in such a way, that the angle of attack may be reliably determined. The geometrical configuration of the first, second, and third sensors may be implemented in the evaluation device such that the evaluation device may determine the angle of attack also on the basis of the geometrical configuration of the sensors.

In this way, a sensor system capable of determining the angle of attack is provided.

According to a further exemplary embodiment of the invention, each sensor of the sensor system (for example the first sensor, the second sensor and/or the third sensor) is an accelerometer and/or a strain sensor, respectively.

In other words, each sensor may be configured to be capable to measure a dynamic vibration of the structure in a broad frequency range without changing the structure dynamic itself.

According to the invention, the evaluation device is configured to determine whether the first response of the structure is generated by a respective local pressure fluctuation of the boundary layer of the air flowing past the aircraft. In an exemplary embodiment, evaluation device is further configured to determine whether the second and/or the third response of the structure is generated by a respective local pressure fluctuation of the boundary layer of the air flowing past the aircraft.

In other words, the evaluation device may be configured for distinguishing between responses that are due to local pressure fluctuations of the boundary layer of the air flowing past the aircraft and responses that are due to other physical influences, for example the vibration of the engine. In this way, the evaluation device may separate the responses that are due to local pressure fluctuations of the boundary layer of the air flowing past the aircraft from other responses that are categorized as noise. This allows the sensor system to determine the actual air velocity more reliably.

An aspect of the invention relates to an aircraft comprising the sensor system described herein, wherein the aircraft comprises the structure and wherein the first sensor is arranged at the structure of the aircraft.

The description given in the context of the sensor system also applies to the aircraft comprising said sensor system. When the aircraft comprises a sensor system for determining the velocity of air flowing past the aircraft having more than one sensors, the sensors may be installed or arranged in flow direction.

According to an exemplary embodiment of the invention, the aircraft comprises a sensor system having first, second and third sensors, each sensor being arranged at the structure of the aircraft. Each sensor of the first, second and third sensors is configured for determining a first/second/third response of the structure of the aircraft to a first/second/third local pressure fluctuation of a boundary layer of the air flowing past the aircraft and for generating a first/second/third signal on the basis of said determined first/second/third response. In addition to the determination of the actual air velocity, the evaluation device is configured for determining an actual angle of attack of the aircraft by determining a maximum or minimum coherence between the first signal, the second signal and the third signal. The first sensor, the second sensor, and the third sensor may, for example, be arranged at the structure of the aircraft in a triangular configuration.

According to a further exemplary embodiment of the invention, the sensor system comprises the first sensor and a plurality of additional sensors. Preferably, the plurality of additional sensors comprises at least three sensors. Each sensor of the plurality of additional sensors is arranged at the structure and is configured for determining a respective response of the structure to a respective local pressure fluctuation in the boundary layer. Furthermore, each sensor of the plurality of additional sensors is configured for generating a respective signal on the basis of the determined response. The evaluation device is configured for determining an angle of attack of the aircraft on the basis of the first signal and the signals of the plurality of additional sensors. The plurality of additional sensors is arranged on a circle or on a circular arc around the first sensor.

The invention further relates to a method of determining an air velocity for an aircraft, which method comprises the step of determining a first response of a structure of the aircraft to a first local pressure fluctuation of a boundary layer of the air flowing past the aircraft, and the step of determining the air velocity on the basis of the determined first response.

Of course, the method steps that are described in the context of the sensor system may also be used to characterize the method described in the context of the present invention. Said method may, for example, be carried out by a sensor system for determining the velocity of air flowing past the aircraft.

A further aspect of the invention relates to a program element, which, when it is executed by a processing unit of a sensor system of an aircraft, instructs the processing unit to carry out the method described in the context of the present invention.

The program element may, for example, be provided as a piece of computer code. Furthermore, the program element may also enable an already existing program element to carry out the method described in the context of the present invention. Thus, the program element may also be an update for an existing program element.

A further aspect of the invention relates to a computer-readable medium, comprising a program element, which, when it is executed by a processing unit of a sensor system of an aircraft, instructs the processing unit to carry out the method described in the context of the present invention.

The computer-readable medium may, for example, be a memory unit. For example, the computer-readable medium may be a hard drive, a server with a hard drive, on which the program element is stored, a USB stick, a CD, or another kind of memory unit.

The aspects described above and further aspects, features and advantages of the invention may also be found in the exemplary embodiments, which are described in the following with reference to the appended drawings.

Brief description of drawings

Fig. 1A shows a sensor system according to an exemplary embodiment of the invention.

Fig. 1B shows a evaluation device of a sensor system according to an exemplary embodiment of the invention.

Fig. 2 shows an aircraft structure with a sensor system according to an exemplary embodiment of the invention.

Figs. 3A, 3B, 3C each show an aircraft structure, on which sensors of a sensor system are arranged according to exemplary embodiments of the invention.

Figs. 4A and 4B show an aircraft structure, on which sensors of a sensor system are arranged according to an exemplary embodiment of the invention.

Fig. 5 shows an aircraft according to an exemplary embodiment of the invention.

Fig. 6 shows a flow-chart according to exemplary embodiments of the invention.

The figures are schematic and are not necessary true to scale. If, in the following description, the same reference signs are used in the context of different figures, they refer to similarly or equivalent elements. Similar or equivalent elements may, however, also be referenced to with different reference signs.

Detailed description of the exemplary embodiments

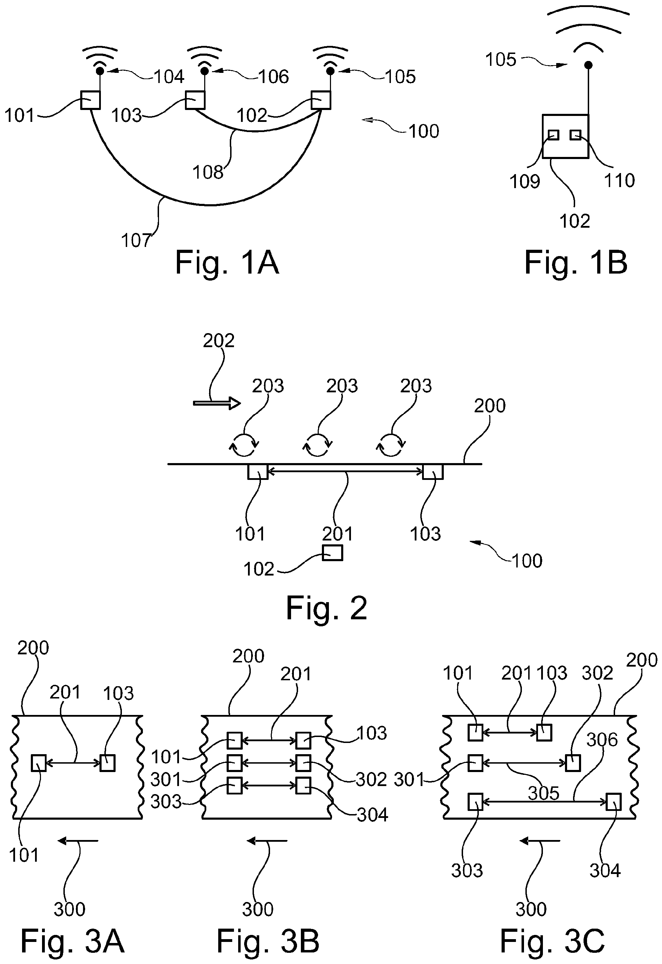

Fig. 1A shows a sensor system 100 comprising a first sensor 101 as well as an evaluation device 102.

Furthermore, it is shown that the sensor system 100 comprises a second sensor 103. The sensor system 100 may also comprise only the first sensor 101. The first sensor 101 and the second sensor 103 are configured for being arranged, i.e. attached to or embedded in, a structure of an aircraft, for example a skin segment, a frame, a stringer or another kind of structural part of the aircraft.

The first sensor 101 is configured for determining a first response of the structure, at which the first sensor is arranged, to a first local pressure fluctuation of a boundary layer of the air flowing past the aircraft. Furthermore, the first sensor is configured for generating a first signal on the basis of the determined first response of the structure. The same also accounts to the second sensor 103 as described in the context of the present invention.

The first sensor 101 and the second sensor 103 are each configured for transmitting the first/second signal to the evaluation device 102. For example, the first and second sensors 101, 103 may be connected to the evaluation device 102 by means of wires 107, 108 for transmitting the signals from the sensors 101, 103 to the evaluation device 102. Alternatively or additionally, the first and second sensors 101, 103 as well as the evaluation device 102 may be equipped with antennas 104, 105 and 106 for transmitting signals from the sensors 101, 103 to the evaluation device 102.

The evaluation device is configured to determine the actual air velocity on the basis of the first signal of the first sensor 101 or on the basis of the first signal of the first sensor 101 and the second signal of the second sensor 103. For example, the evaluation device 102 may comprise a processing unit, that is configured for determining said actual air velocity. Furthermore, the evaluation device may also comprise a storing unit, on which a first database and/or a second database as described in the context of the present invention is stored.

Fig. 1B shows an evaluation device 102 of a sensor system according to an exemplary embodiment of the invention. The evaluation device comprises a processing unit 109 and a storing unit 110. The processing unit 109 may be configured for carrying out the steps for determining the air velocity described herein. In the storing unit 110, the first and second databases described herein may be stored. It is also shown that the evaluation device 102 comprises an antenna 105 for receiving the signals of the sensors.

The evaluation device may, however, alternatively or additionally comprise a wire for receiving said signals.

Fig. 2 shows a sensor system 100 according to an exemplary embodiment of the invention, which sensor system comprises a first sensor 101 and a second sensor 103 that are attached to a structure, e.g. a skin segment, 200 of an aircraft. Although, Fig. 2 shows that the first and second sensors 101 and 103 are attached to the same structure 200, for example the skin segment of the aircraft, it may also be possible that the different sensors (e.g. the first and second sensors 101 and 103) are arranged at different structures. For example, the first sensor 101 may be arranged at a first skin segment and the second sensor 103 may be arranged at a second skin segment.

In Fig. 2 it is further shown that the air is flowing past the structure 200 along the direction 202. In the boundary layer of the air flowing past the aircraft 202 or flowing past the structure 200 of the aircraft, eddies or vortices 203 are created, that travel along the structure 200 of the aircraft. These eddies or vortices 203 correspond to the local pressure fluctuations described herein. The eddies 203 may cause structural responses, for example an oscillation or vibration, of the structure 200. The responses are detected by the sensors 101 and 103, which are configured to generate a respective first/second signal on the basis of said detected responses. The signals are then transmitted to the evaluation device 102 and the evaluation device 102 is configured to determine the actual air velocity on the basis of the first/second signals transmitted from the first/second sensors 101/103 to the evaluation device 102. Furthermore, the evaluation device may comprise a storing unit on which the distance 201 between the first and second sensors 101 and 103 is stored. The evaluation device may be configured for determine the actual air velocity on the basis of the first/second signals of the first/second sensors 101, 103 and the distance 201.

Figs. 3A, 3B and 3C show different arrangements of pairs of sensors of a sensor system described in the context of the present invention on a structure, for example a skin segment 200, of an aircraft. Although it is shown that the sensors are arranged on the same structure, the different sensors may also be arranged at different structures.

Fig. 3A shows a pair of sensors 101, 103 that are arranged at a distance 201. The arrow 300 refers to the z-direction or longitudinal direction of the aircraft. Thus, the distance between the two sensors 101 and 103 is along the z-direction 300.

Fig. 3B shows an arrangement of three pairs of sensors 101 and 103, 301 and 302, 303 and 304 on the structure 200 of the aircraft. All three pairs of sensors 101 and 103, 301 and 302, 303 and 304 are arranged with the same distance 201 in z-direction 300. By having more than two sensors, it is possible to determine an angle of attack of the aircraft. For example, the evaluation device (not shown) can be configured to determine coherences between the sensors attached to the structure 200. For example, if the evaluation device determines that the maximum or minimal coherence is between the sensors 103 and 303, the angle of attack may be derived from the line connecting the sensor 103 and the sensor 303. This is, however, only a simplified example for explaining how the angle of attack can principally be determined.

Fig. 3C shows an aircraft structure 200 with three pairs of sensors 101 and 103, 301 and 302, and 303 and 304. According to this exemplary embodiment, the distances 201, 305 and 306 between the pairs of sensors 101 and 103, 301 and 302, 303 and 304 along the z-direction 300 are different.

The accuracy of the results is sensitive to the sensor distances. A short distance will lead to a good signal correlation, but the delay time becomes very short. This short delay time is sensitive to the measurement uncertainty. For a longer distance the coherence between the two signals becomes worse. Depending on the turbulent boundary layer thickness and the air velocity there is an optimal distance between the sensors. During a flight, these parameters are changing such that different distances between the sensors are needed for optimally determining the air velocity. Thus, by providing sensor pairs with different distances along the z-direction, the sensor system may be adapted to precisely determine the air velocity in different flight situations (e.g. at different aircraft velocities).

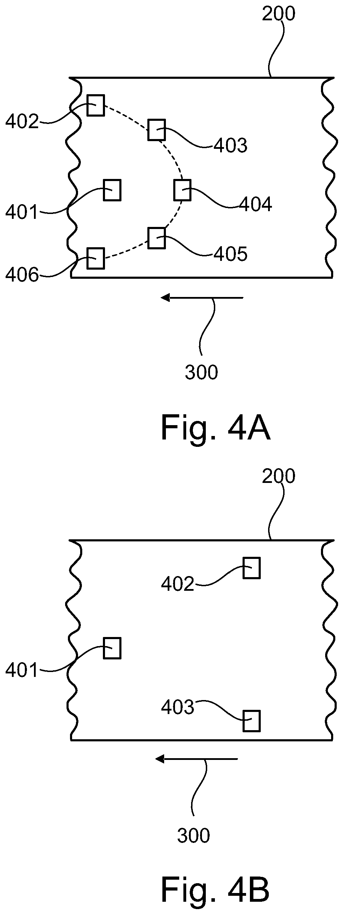

Fig. 4A shows a structure 200 of an aircraft, at which sensors 401 to 406 of a sensor system according to an exemplary embodiment of the invention are arranged. The arrow 300 refers to the z-direction of the aircraft. According to this exemplary embodiment, the sensor system comprises a first sensor 401 as well as additional sensors 402 to 406, which additional sensors 402 to 406 are arranged on a circular arc. The evaluation device may be configured to determine a correlation between the first sensor 401 and the additional sensors 402 to 406. By determining the additional sensor 402 to 406, which produces together with the first sensor the maximum or minimum coherence, the evaluation device (not shown) can determine the actual angle of attack. For example, the angle of attack may be determined by the line connecting the first sensor 401 and the additional sensors 402 to 406 which yields the maximum or minimum coherence together with the first sensor 401.

Fig 4B shows a similar structure 200 of an aircraft, at which sensors 401 to 403 of a sensor system according to an exemplary embodiment of the invention are arranged. According to this exemplary embodiment, the sensors 401 to 403 are arranged in a triangular configuration.

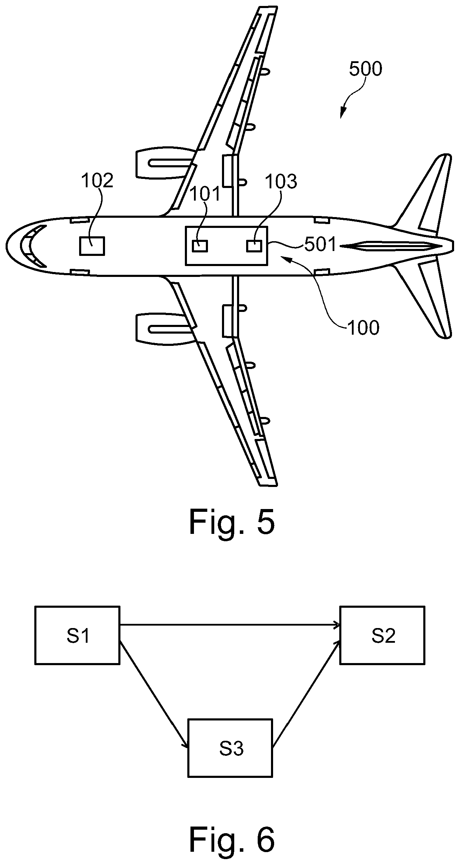

Fig. 5 shows an aircraft 500 according to an exemplary embodiment of the invention. The aircraft 500 comprises a sensor system. The sensor system 100 comprises first and second sensors 101 and 103 as well as an evaluation device. Although it is shown that the sensor system 100 comprises two sensors 101 and 103, the sensor system according to the present invention may also comprise only one sensor 101. The first and second sensors 101 and 103 are arranged, for example attached or embedded in, a structure 501 of the aircraft 500, for example a skin segment.

Fig. 6 shows a flow-chart of a method of determining an air velocity for an aircraft according to exemplary embodiments of the invention. The method comprises step S1 of determining a first response of a structure of the aircraft and the step S2 of determining the air velocity on the basis of the determined first response. According to a further exemplary embodiment, the method may comprise the step S1 of determining a first response of a structure of the aircraft, the step S3 of determining a second response of the structure of the aircraft and the step S2 of determining the air velocity on the basis of the determined first and second responses.

In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. The reference numerals in the claims are not intended to restrict the scope of the claims.

## Claims

1. Sensor system (100) for an aircraft (500) for determining a velocity of air flowing past the aircraft, the sensor system comprising:

   a first sensor (101) configured for being arranged at a structure (200) of the aircraft;
   a second sensor (103) for being arranged at the structure of the aircraft;
   an evaluation device (102);
   wherein the first sensor is configured for determining a first response of the structure (200) to a first local pressure fluctuation of a boundary layer of the air flowing past the aircraft;
   wherein the first sensor is configured for generating a first signal on the basis of said determined first response;
   wherein the evaluation device is configured for processing the first signal and for determining an actual air velocity on the basis of the first signal;
   wherein the second sensor is configured for determining a second response of the structure (200) to a second local pressure fluctuation of the boundary layer of the air flowing past the aircraft;
   wherein the second sensor is configured for generating a second signal on the basis of said determined second response;
   wherein the evaluation device is configured for processing the first signal and the second signal and for determining a further actual air velocity on the basis of the first signal and the second signal by:

      determining a correlation function between the first signal and the second signal and determining the further actual air velocity on the basis of the determined correlation function;

determining a velocity of eddies (203) of a boundary layer of the air flowing past the aircraft on the basis of the correlation function; wherein the evaluation device comprises an eddy velocity/air velocity database, which eddy velocity/air velocity database comprises a plurality of third-type entries corresponding to velocities of eddies and a plurality of fourth-type entries corresponding to air velocities, the third-type entries being linked to the fourth-type entries; looking-up an air velocity in the eddy velocity/air velocity database on the basis of the eddy velocity/air velocity.

2. Sensor system (100) according to claim 1, wherein the evaluation device comprises a first sensor signal/air velocity database, which first sensor signal/air velocity database comprises a plurality of first-type entries corresponding to signals of the first sensor and a plurality of second-type entries corresponding to air velocities, the first-type entries being linked to the second-type entries; and wherein the evaluation device is configured for looking-up the actual air velocity in the first sensor signal/air velocity database on the basis of the first signal.

3. Sensor system (100) according to claim 2, wherein the first-type entries of the first sensor signal/air velocity database correspond to frequency spectra of signals of the first sensor; and wherein the evaluation device is configured for generating a first frequency spectrum of the first signal and for looking-up the actual air velocity in the first sensor signal/air velocity database on the basis of the first frequency spectrum.

4. Sensor system (100) according to one of claims 1 to 3, the sensor system comprising:

a third sensor (301) configured for being arranged at a structure of the aircraft; wherein the third sensor is configured for determining a third response of the structure (200) to a third local pressure fluctuation of the boundary layer of the air flowing past the aircraft; wherein the third sensor is configured for generating a third signal on the basis of said determined third response; and wherein the evaluation device is configured for determining an actual angle of attack of the aircraft by determining a maximum or minimum coherence between the first signal, the second signal and the third signal.

5. Sensor system (100) according to any one of the preceding claims, wherein each sensor (101, 103, 301, 302, 303, 304, 401, 402, 403, 404, 405, 406) of the sensor system is an accelerometer and/or a strain sensor, respectively.

6. Sensor system (100) according to any one of the preceding claims, wherein the evaluation device is configured to separate the first response, the second response and/or the third response of the structure being generated by a respective local pressure fluctuation of the boundary layer of the air flowing past the aircraft from other responses that are categorized as noise.

7. Aircraft (500) comprising the sensor system (100) according to any one of the preceding claims, the aircraft comprising:

the structure (200) of the aircraft; wherein the first sensor (101) is arranged at the structure (200) of the aircraft.

8. Aircraft (500) according to claim 7 comprising the sensor system (100) according to claim 4: wherein the first sensor (101), the second sensor (102) and the third sensor (301) are arranged at the structure of the aircraft.

9. Method of determining an air velocity for an aircraft, the method comprising the steps:

determining, by a first sensor, a first response of a structure of the aircraft (S1) to a first local pressure fluctuation of a boundary layer of the air flowing past the aircraft, said first sensor generating a first signal on the basis of said determined first response; processing the first signal and determining an actual air velocity on the basis of the first signal (S2); determining, by a second sensor, a second response of the structure to a second local pressure fluctuation of the boundary layer of the air flowing past the aircraft; generating a second signal on the basis of said determined second response; and processing the first signal and the second signal and determining a further actual air velocity on the basis of the first signal and the second signal by:

determining a correlation function between the first signal and the second signal and determining the further actual air velocity on the basis of the determined correlation function; determining a velocity of eddies (203) of a boundary layer of the air flowing past the aircraft on the basis of the correlation function; and

looking-up an air velocity in an eddy velocity/air velocity database on the basis of the eddy velocity/air velocity, the eddy velocity/air velocity database comprising a plurality of third-type entries corresponding to velocities of eddies and a plurality of fourth-type entries corresponding to air velocities, the third-type entries being linked to the fourth-type entries.

10. Program element, which, when it is executed by the processing unit of the sensor system of an aircraft according to claim 1, instructs the processing unit to carry out the method according to claim 9.

11. Computer readable medium, comprising a program element according to claim 10, which, when it is executed by a processing unit of a sensor system of an aircraft, instructs the processing unit to carry out the method according to claim 9.

**Patentansprüche**

1. Sensorsystem (100) für ein Luftfahrzeug (500) zum Ermitteln einer Geschwindigkeit von an dem Luftfahrzeug vorbei strömender Luft, wobei das Sensorsystem umfasst:

einen ersten Sensor (101), der eingerichtet ist, um an einer Struktur (200) des Luftfahrzeugs angeordnet zu sein;
einen zweiten Sensor (103), der eingerichtet ist, um an der Struktur des Luftfahrzeugs angeordnet zu sein;
eine Auswertungsvorrichtung (102);
wobei der erste Sensor eingerichtet ist, um eine erste Reaktion der Struktur (200) auf eine erste lokale Druckschwankung einer Grenzschicht der hinter dem Luftfahrzeug strömenden Luft zu ermitteln;
wobei der erste Sensor eingerichtet ist, um auf der Grundlage der ermittelten ersten Reaktion ein erstes Signal zu erzeugen;
wobei die Auswertungsvorrichtung eingerichtet ist, um das erste Signal zu verarbeiten und auf der Grundlage des ersten Signals eine tatsächliche Luftgeschwindigkeit zu ermitteln;
wobei der zweite Sensor eingerichtet ist, um eine zweite Reaktion der Struktur (200) auf eine zweite lokale Druckschwankung der Grenzschicht der hinter dem Luftfahrzeug strömenden Luft zu ermitteln;
wobei der zweite Sensor eingerichtet ist, um auf der Grundlage der ermittelten zweiten Reaktion ein zweites Signal zu erzeugen;
wobei die Auswertungsvorrichtung eingerichtet ist, um das erste Signal und das zweite Signal zu verarbeiten und auf der Grundlage des ersten Signals und des zweiten Signals eine weitere tatsächliche Luftgeschwindigkeit zu ermitteln durch:

Ermitteln einer Korrelationsfunktion zwischen dem ersten Signal und dem zweiten Signal und Ermitteln der weiteren tatsächlichen Luftgeschwindigkeit auf der Grundlage der ermittelten Korrelationsfunktion;
Ermitteln einer Geschwindigkeit von Wirbeln (203) einer Grenzschicht der hinter dem Luftfahrzeug strömenden Luft auf der Grundlage der Korrelationsfunktion; wobei die Auswertungsvorrichtung eine Wirbelgeschwindigkeits-/Luftgeschwindigkeitsdatenbank umfasst, wobei die Wirbelgeschwindigkeits-/Luftgeschwindigkeitsdatenbank eine Vielzahl von Einträgen eines dritten Typs, die Geschwindigkeiten von Wirbeln entsprechen, und eine Vielzahl von Einträgen eines vierten Typs umfasst, die Luftgeschwindigkeiten entsprechen, wobei die Einträge des dritten Typs mit den Einträgen des vierten Typs verknüpft sind;
Nachschlagen einer Luftgeschwindigkeit in der Wirbelgeschwindigkeits-/Luftgeschwindigkeitsdatenbank auf der Grundlage der Wirbelgeschwindigkeit/Luftgeschwindigkeit.

2. Sensorsystem (100) nach Anspruch 1,
wobei die Auswertungsvorrichtung eine erste Sensorsignal-/Luftgeschwindigkeitsdatenbank umfasst, wobei die erste Sensorsignal-/Luftgeschwindigkeitsdatenbank eine Vielzahl von Einträgen eines ersten Typs, die Signalen des ersten Sensors entsprechen, und eine Vielzahl von Einträgen eines zweiten Typs umfasst, die Luftgeschwindigkeiten entsprechen, wobei die Einträge des ersten Typs mit den Einträgen des zweiten Typs verknüpft sind; und
wobei die Auswertungsvorrichtung eingerichtet ist, um auf der Grundlage des ersten Signals die tatsächliche Luftgeschwindigkeit in der ersten Sensorsignal-/Luftgeschwindigkeitsdatenbank nachzuschlagen.

3. Sensorsystem (100) nach Anspruch 2,
wobei die Einträge ersten Typs der ersten Sensorsignal-/Luftgeschwindigkeitsdatenbank Frequenzspektren von Signalen des ersten Sensors entsprechen; und
wobei die Auswertungsvorrichtung eingerichtet ist, um ein erstes Frequenzspektrum des ersten Signals zu erzeugen und auf der Grundlage des ersten Frequenzspektrums die tatsächliche Luftgeschwindigkeit in der ersten Sensorsignal-/Luftgeschwindigkeitsdatenbank nachzuschlagen.

4. Sensorsystem (100) nach einem der Ansprüche 1 bis 3, wobei das Sensorsystem umfasst:

    einen dritten Sensor (301), der eingerichtet ist, um an einer Struktur des Luftfahrzeugs angeordnet zu sein;
    wobei der dritte Sensor eingerichtet ist, um eine dritte Reaktion der Struktur (200) auf eine dritte lokale Druckschwankung der Grenzschicht der hinter dem Luftfahrzeug strömenden Luft zu ermitteln;
    wobei der dritte Sensor eingerichtet ist, um auf der Grundlage der ermittelten dritten Reaktion ein drittes Signal zu erzeugen; und
    wobei die Auswertungsvorrichtung eingerichtet ist, um einen tatsächlichen Anströmwinkel des Luftfahrzeugs zu ermitteln, indem eine maximale oder minimale Übereinstimmung zwischen dem ersten Signal, dem zweiten Signal und dem dritten Signal ermittelt wird.

5. Sensorsystem (100) nach einem der vorhergehenden Ansprüche,
wobei jeder Sensor (101, 103, 301, 302, 303, 304, 401, 402, 403, 404, 405, 406) des Sensorsystems ein Beschleunigungsmesser und/oder ein Belastungssensor ist.

6. Sensorsystem (100) nach einem der vorhergehenden Ansprüche,
wobei die Auswertungsvorrichtung eingerichtet ist, um die erste Reaktion, die zweite Reaktion und/oder die dritte Reaktion, die durch eine jeweilige lokale Druckschwankung der Grenzschicht der hinter dem Luftfahrzeug strömenden Luft erzeugt wird, von anderen Reaktionen zu trennen, die als Rauschen eingestuft sind.

7. Luftfahrzeug (500), umfassend das Sensorsystem (100) nach einem der vorhergehenden Ansprüche,
wobei das Luftfahrzeug umfasst:

    die Struktur (200) des Luftfahrzeugs;
    wobei der erste Sensor (101) an der Struktur (200) des Luftfahrzeugs angeordnet ist.

8. Luftfahrzeug (500) nach Anspruch 7, umfassend das Sensorsystem (100) nach Anspruch 4:
wobei der erste Sensor (101), der zweite Sensor (102) und der dritte Sensor (301) an der Struktur des Luftfahrzeugs angeordnet sind.

9. Verfahren zum Ermitteln einer Luftgeschwindigkeit für ein Luftfahrzeug, wobei das Verfahren die Schritte umfasst:

    durch einen ersten Sensor Ermitteln einer ersten Reaktion einer Struktur des Luftfahrzeugs (S1) auf eine erste lokale Druckschwankung einer Grenzschicht der hinter dem Luftfahrzeug strömenden Luft, wobei der erste Sensor auf der Grundlage der ermittelten ersten Reaktion ein erstes Signal erzeugt;
    Verarbeiten des ersten Signals und Ermitteln einer tatsächlichen Luftgeschwindigkeit auf der Grundlage des ersten Signals (S2);
    durch einen zweiten Sensor Ermitteln einer zweiten Reaktion der Struktur auf eine zweite lokale Druckschwankung der Grenzschicht der hinter dem Luftfahrzeug strömenden Luft;
    Erzeugen eines zweiten Signals auf der Grundlage der ermittelten zweiten Reaktion; und
    Verarbeiten des ersten Signals und des zweiten Signals und Ermitteln einer weiteren tatsächlichen Luftgeschwindigkeit auf der Grundlage des ersten Signals und des zweiten Signals durch:

        Ermitteln einer Korrelationsfunktion zwischen dem ersten Signal und dem zweiten Signal und Ermitteln der weiteren tatsächlichen Luftgeschwindigkeit auf der Grundlage der ermittelten Korrelationsfunktion;
        Ermitteln einer Geschwindigkeit von Wirbeln (203) einer Grenzschicht der hinter dem Luftfahrzeug strömenden Luft auf der Grundlage der Korrelationsfunktion; und
        Nachschlagen einer Luftgeschwindigkeit in einer Wirbelgeschwindigkeits-/Luftgeschwindigkeitsdatenbank auf der Grundlage der Wirbelgeschwindigkeit/Luftgeschwindigkeit, wobei die Wirbelgeschwindigkeits-/Luftgeschwindigkeitsdatenbank eine Vielzahl von Einträgen eines dritten Typs, die Geschwindigkeiten von Wirbeln entsprechen, und eine Vielzahl von Einträgen eines vierten Typs umfasst, die Luftgeschwindigkeiten entsprechen, wobei die Einträge des dritten Typs mit den Einträgen des vierten Typs verknüpft sind.

10. Programmelement, das bei Ausführung durch die Verarbeitungseinheit des Sensorsystems eines Luftfahrzeugs nach Anspruch 1 die Verarbeitungseinheit anweist, das Verfahren nach Anspruch 9 auszuführen.

11. Durch Computer lesbares Medium, umfassend ein Programmelement nach Anspruch 10, das bei Ausführung durch die Verarbeitungseinheit des Sensorsystems eines Luftfahrzeugs die Verarbeitungseinheit anweist, das Verfahren nach Anspruch 9 auszuführen.

**Revendications**

1. Système de capteurs (100) pour un aéronef (500) destiné à déterminer une vitesse d'air s'écoulant au-delà de l'aéronef, le système de capteurs comprenant :

   un premier capteur (101) configuré pour être disposé au niveau d'une structure (200) de l'aéronef ;
   un deuxième capteur (103) destiné à être disposé au niveau de la structure de l'aéronef ;
   un dispositif d'évaluation (102) ;
   dans lequel le premier capteur est configuré pour déterminer une première réponse de la structure (200) à une première fluctuation locale de pression d'une couche limite de l'air s'écoulant au-delà de l'aéronef ;
   dans lequel le premier capteur est configuré pour générer un premier signal sur la base de ladite première réponse déterminée ;
   dans lequel le dispositif d'évaluation est configuré pour traiter le premier signal et pour déterminer une vitesse d'air réelle sur la base du premier signal ;
   dans lequel le deuxième capteur est configuré pour déterminer une deuxième réponse de la structure (200) à une deuxième fluctuation locale de pression de la couche limite de l'air s'écoulant au-delà de l'aéronef ;
   dans lequel le deuxième capteur est configuré pour générer un deuxième signal sur la base de ladite deuxième réponse déterminée ;
   dans lequel le dispositif d'évaluation est configuré pour traiter le premier signal et le deuxième signal et pour déterminer une autre vitesse d'air réelle sur la base du premier signal et du deuxième signal :

   en déterminant une fonction de corrélation entre le premier signal et le deuxième signal et en déterminant l'autre vitesse d'air réelle sur la base de la fonction de corrélation déterminée ;
   en déterminant une vitesse de tourbillons (203) d'une couche limite de l'air s'écoulant au-delà de l'aéronef sur la base de la fonction de corrélation ; le dispositif d'évaluation comprenant une base de données de vitesses de tourbillons/vitesses d'air, laquelle base de données de vitesses de tourbillons/vitesses d'air comprend une pluralité d'entrées d'un troisième type correspondant à des vitesses de tourbillons et une pluralité d'entrées d'un quatrième type correspondant à des vitesses d'air, les entrées du troisième type étant liées aux entrées du quatrième type ;
   en recherchant une vitesse d'air dans la base de données de vitesses de tourbillons/vitesses d'air sur la base de la vitesse de tourbillons/vitesse d'air.

2. Système de capteurs (100) selon la revendication 1, dans lequel le dispositif d'évaluation comprend une première base de données de signaux de capteur/vitesses d'air, laquelle première base de données de signaux de capteur/vitesses d'air comprend une pluralité d'entrées d'un premier type correspondant à des signaux du premier capteur et une pluralité d'entrées d'un deuxième type correspondant à des vitesses d'air, les entrées du premier type étant liées aux entrées du deuxième type ; et
   dans lequel le dispositif d'évaluation est configuré pour rechercher la vitesse d'air réelle dans la première base de données de signaux de capteur/vitesses d'air sur la base du premier signal.

3. Système de capteurs (100) selon la revendication 2, dans lequel les entrées du premier type de la première base de données de signaux de capteur/vitesses d'air correspondent à des spectres de fréquence de signaux du premier capteur ; et
   dans lequel le dispositif d'évaluation est configuré pour générer un premier spectre de fréquence du premier signal et pour rechercher la vitesse d'air réelle dans la première base de données de signaux de capteur/vitesses d'air sur la base du premier spectre de fréquence.

4. Système de capteurs (100) selon une des revendications 1 à 3, le système de capteurs comprenant :

   un troisième capteur (301) configuré pour être disposé au niveau d'une structure de l'aéronef ;
   dans lequel le troisième capteur est configuré pour déterminer une troisième réponse de la structure (200) à une troisième fluctuation locale de pression de la couche limite de l'air s'écoulant au-delà de l'aéronef ;
   dans lequel le troisième capteur est configuré pour générer un troisième signal sur la base de ladite troisième réponse déterminée ; et
   dans lequel le dispositif d'évaluation est configuré pour déterminer un angle réel d'attaque de l'aéronef en déterminant une cohérence maximale ou minimale entre le premier signal, le deuxième signal et le troisième signal.

5. Système de capteurs (100) selon l'une quelconque des revendications précédentes, chaque capteur (101, 103, 301, 302, 303, 304, 401, 402, 403, 404, 405, 406) du système de capteurs étant un accéléromètre et/ou un extensomètre, respectivement.

6. Système de capteurs (100) selon l'une quelconque des revendications précédentes, dans lequel le dispositif d'évaluation est configuré pour séparer la première réponse, la deuxième réponse et/ou la troisième réponse de la structure générées par une fluctuation locale de pression respective de la couche limite de l'air s'écoulant au-delà de l'aéronef d'autres réponses qui sont classées comme bruit.

7. Aéronef (500) comprenant le système de capteurs (100) selon l'une quelconque des revendications précédentes, l'aéronef comprenant :

　　la structure (200) de l'aéronef ;
　　dans lequel le premier capteur (101) est disposé au niveau de la structure (200) de l'aéronef.

8. Aéronef (500) selon la revendication 7 comprenant le système de capteurs (100) selon la revendication 4 :
　　dans lequel le premier capteur (101), le deuxième capteur (102) et le troisième capteur (301) sont disposés au niveau de la structure de l'aéronef.

9. Procédé de détermination d'une vitesse d'air pour un aéronef, le procédé comprenant les étapes suivantes :

　　détermination, par un premier capteur, d'une première réponse d'une structure de l'aéronef (S1) à une première fluctuation locale de pression d'une couche limite de l'air s'écoulant au-delà de l'aéronef, ledit premier capteur générant un premier signal sur la base de ladite première réponse déterminée ;
　　traitement du premier signal et détermination d'une vitesse d'air réelle sur la base du premier signal (S2) ;
　　détermination, par un deuxième capteur, d'une deuxième réponse de la structure à une deuxième fluctuation locale de pression de la couche limite de l'air s'écoulant au-delà de l'aéronef ;
　　génération d'un deuxième signal sur la base de ladite deuxième réponse déterminée ; et
　　traitement du premier signal et du deuxième signal et détermination d'une autre vitesse d'air réelle sur la base du premier signal et du deuxième signal par :

　　　　détermination d'une fonction de corrélation entre le premier signal et le deuxième signal et détermination de l'autre vitesse d'air réelle sur la base de la fonction de corrélation déterminée ;

　　　　détermination d'une vitesse de tourbillons (203) d'une couche limite de l'air s'écoulant au-delà de l'aéronef sur la base de la fonction de corrélation ; et
　　　　recherche d'une vitesse d'air dans une base de données de vitesses de tourbillons/vitesses d'air sur la base de la vitesse de tourbillons/vitesses d'air, la base de données de vitesses de tourbillons/vitesses d'air comprenant une pluralité d'entrées d'un troisième type correspondant à des vitesses de tourbillons et une pluralité d'entrées d'un quatrième type correspondant à des vitesses d'air, les entrées du troisième type étant liées aux entrées du quatrième type.

10. Élément de programme qui, lorsqu'il est exécuté par l'unité de traitement du système de capteurs d'un aéronef selon la revendication 1, donne l'instruction à l'unité de traitement de réaliser le procédé selon la revendication 9.

11. Support lisible par ordinateur, comprenant un élément de programme selon la revendication 10 qui, lorsqu'il est exécuté par une unité de traitement d'un système de capteurs d'un aéronef, donne l'instruction à l'unité de traitement de réaliser le procédé selon la revendication 9.

Fig. 1A

Fig. 1B

Fig. 2

Fig. 3A

Fig. 3B

Fig. 3C

Fig. 4A

Fig. 4B

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0824669 B1
- US 20140229139 A1
- US 20140358333 A1